# EUROPEAN PATENT APPLICATION

(11) **EP 4 059 583 A1**
(43) Date of publication of application: **21.09.2022**
(21) Application number: 20886493.4
(22) Date of filing: 03.11.2020
(51) Int. Cl.: A63F 13/35, A63F 13/60, G06Q 50/10

(54) **GAME PRODUCTION AND DISTRIBUTION SYSTEM FOR HTML5-BASED WEB GAME PRODUCTION AND DISTRIBUTION, AND METHOD THEREOF**

(30) Priority: 15.11.2019 KR 20190146731; 08.10.2020 KR 20200129917
(71) Applicant: Fromthered Inc., Seodaemun-gu Seoul 03761 (KR)
(72) Inventor: SEO, Sang Wook, Seoul 07665 (KR)
(74) Representative: Rolinec, Mark
(86) International application number: PCT/KR2020/015238
(87) International publication number: WO 2021/096146

(57) **Abstract**

Disclosed are a game production and distribution system for HTML 5-based web game production and distribution and a method thereof which allow a user to easily produce a game according to a predetermined sequence in an HTML 5-environment. The present invention exhibits an effect of enabling a user to intuitively produce a game even without professional programming knowledge.

## Description

### [Technical Field]

The present invention relates to a game production and distribution system, more particularly, to a game production and distribution system for producing and distributing HTML5-based web games.

### [Background Art]

With the development of a cloud server environment, types of web applications able to be executed in a browser without restrictions of platforms and operating systems are rapidly increasing.

Although more than 3,000 games have been developed with HTML5 in the world, the domestic HTML5 game development technology and market are relatively small and the technology distribution is also slow whereby it is now required to ensure competitiveness of HTML5-related technology as a recent issue.

Furthermore, as a kind of web games, flash games have been activated but a problem on flash-type security issues has arisen, and a technology capable of replacing the same is required.

Further, since coding education for elementary/middle/high school students becomes mandatory, a need for production solutions required for the coding education is gradually increasing.

Korean Patent Laid-Open Publication No. 10-2018-0028831 discloses a mobile content providing system, but this system is not optimized for HTML5 and only allows that game content information arbitrarily selected by a user can be used on another user's mobile terminal. Therefore, there are problems in that convenience in game content production would not be improved, and in that it is not possible to provide a reward for use of the produced game content by other users to a game creator, at the same time, as the other users use the produced game content.

### [Disclosure]

### [Technical Problem]

Accordingly, a first object of the present invention in order to solve the above problem is to provide a game production and distribution system for producing and distributing HTML5-based web games by allowing a game to be naturally produced in a preset order in HTML5 environment, so that game production is intuitively possible even without professional and specific programming knowledge; sound sources and graphic images can be shared; game production and distribution are possible only with ideas; profits from the produced games may be shared with the producer; and procedures in regard to a process of examining upload of the produced game, and confirmation of the examined results and assessment opinions, etc. may more simply proceed, thereby achieving innovation in the web game industry.

Further, a second object of the present invention is to provide a game production and distribution method for producing and distributing HTML5-based web games by allowing a game to be naturally produced in a preset order in an HTML5 environment, so that game production is intuitively possible even without professional and specific programming knowledge; sound sources and graphic images can be shared; game production and distribution are possible only with ideas; profits from the produced games may be shared with the producer; and procedures in regard to a process of examining upload of the produced game, and confirmation of the examined results and assessment opinions, etc. may more simply proceed, thereby achieving innovation in the web game industry.

### [Technical Solution]

In order to achieve the first object, the present invention provides a game production and distribution system, which includes a game production and distribution server for receiving input signals from a user terminal, wherein the game production and distribution server includes: a communication unit to receive an input signal from the user terminal; a storage unit that stores at least one among user information, game production-related templates and a produced game; and, a control unit that selects a game corresponding to a game selection signal among the games stored in the storage unit if the input signals include the game selection signal, and controls the communication unit to transmit the selected game to the user terminal.

The control unit may include a game list recommendation module that analyzes a game selection propensity and game performance ability of the user using the user information, generates a game list corresponding to the analyzed result, and then, controls the communication unit to transmit the generated game list to the user terminal.

The control unit may further include a game production template providing module that selects a game production template corresponding to a game production signal if the input signals include the game production signal, and controls the communication unit to transmit the selected template to the user terminal.

The control unit may further include an advertisement providing module that analyzes a result of game performance by the user using the user information and controls the communication unit to transmit an advertisement corresponding to the analyzed result to the user terminal.

The storage unit may store the produced game contained in a game upload signal if the input signals include the game upload signal, and the control unit may further include an opening examination module that examines whether or not to disclose the produced game stored in the storage unit.

In order to achieve the second object, the present invention provides a game production and distribution method which includes: storing at least one among user information, game production-related templates and the produced game in a storage unit; receiving input signals from a user terminal by a communication unit; if the input signals include a game selection signal, selecting a game corresponding to the game selection signal among the games stored in the storage unit by a control unit; and transmitting the game selected by the control unit to the user terminal through the communication unit.

### [Advantageous effects]

By the game production and distribution system and method for producing and distributing HTML5-based web games according to the present invention as described above, games can be naturally produced in a preset order in HTML5 environment, so that game production is intuitively possible even without professional and specific programming knowledge; sound sources and graphic images can be shared; game production and distribution are possible only with ideas; profits from the produced games may be shared with the producer; and procedures in regard to a process of examining upload of the produced game, and confirmation of the examined results and assessment opinions, etc. may more simply proceed, thereby achieving innovation in the web game industry.

### [Description of Drawings]

FIG. 1 is a diagram showing a schematic configuration of the game production and distribution system according to an embodiment of the present invention.
FIG. 2 is a diagram showing a schematic configuration of a game production and distribution server, which is a component of the present invention.
FIG. 3 is a diagram showing a schematic configuration of a control unit, which is a component of the present invention.
FIG. 4 is a diagram illustrating a schematic flow of the game production and distribution method according to an embodiment of the present invention.

### [Detailed Description of Preferred Embodiments of Invention]

Terms and words used in the present specification and claims are not limited to the usual or dictionary meanings and, on the basis of the principle that the inventor may appropriately define the concept of terms in order to describe an invention to be used by users in the best way, the above terms and words should be interpreted as the meanings and concepts consistent with the technical idea of the present invention.

Throughout the specification, when a part "includes" any component, this means that other components may be further included rather than excluding the same unless specifically stated otherwise. Further, terms such as "..part", "..device", "..member", "module", "apparatus", etc. refer to a unit that processes at least one function or operation, which may be implemented by a combination of hardware and/or software.

The terms used in the embodiments of the present invention will be briefly described, while the present embodiments will be described in more detail.

The terms used in the embodiments of the present invention have been selected from general terms that are currently widely used as possible while considering functions thereof in the present invention. However, these may vary depending on intention of a technician working in the field, precedent, emergence of new technologies, or the like. Further, in a specific case, there are terms arbitrarily selected by an applicant and, in this case, the meanings of the terms would be described in detail in the description of the corresponding embodiments. Therefore, the terms used in the present embodiments should be defined based on the meanings of the terms and the overall contents of the present embodiments rather than a simple name of each of the terms.

In the embodiments of the present invention, terms including ordinal number such as "first", "second", etc. may be used to describe different elements but these elements are not limited thereby. The above terms are used only for the purpose of distinguishing one component from another component. For example, without departing from the scope of the present invention, a first element may be referred to as a second element and, similarly, a second element may also be referred to as a first element. Further, the term "and/or" may include a combination of a plurality of related and mentioned items or any among a plurality of related and mentioned items.

Further, in the embodiments of the present invention, a singular expression may include a plurality of expressions unless the context clearly indicates otherwise.

Further, in the embodiments of the present invention, terms such as "include" or "have" are intended to designate the existence of features or numbers, steps, actions, components, parts or a combination thereof described in the specification, therefore, it is to be understood that the possibility of the presence or addition of one or more other features or numbers, steps, actions, components, parts or a combination thereof is not preliminarily excluded.

Further, in the embodiments of the present invention, the "module" or "unit" may execute at least one function or operation, and may be implemented as hardware or software, or a combination of hardware and software. Further, a plurality of "modules" or a plurality of "units" may be integrated into at least one module and implemented as at least one processor except for the "module" or "unit" that needs to be implemented wit specific hardware.

In addition, in the embodiments of the present invention, when a part is "connected" with another part, it is not only "directly connected" but also includes a case where the part is "electrically connected" with another part while interposing a different element therebetween.

Hereinafter, the embodiments of the present invention will be described in detail with reference to the accompanying drawings.

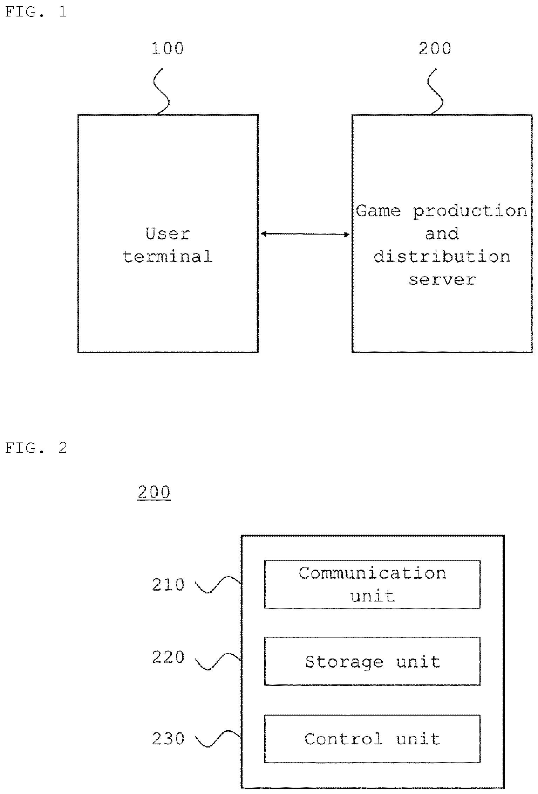

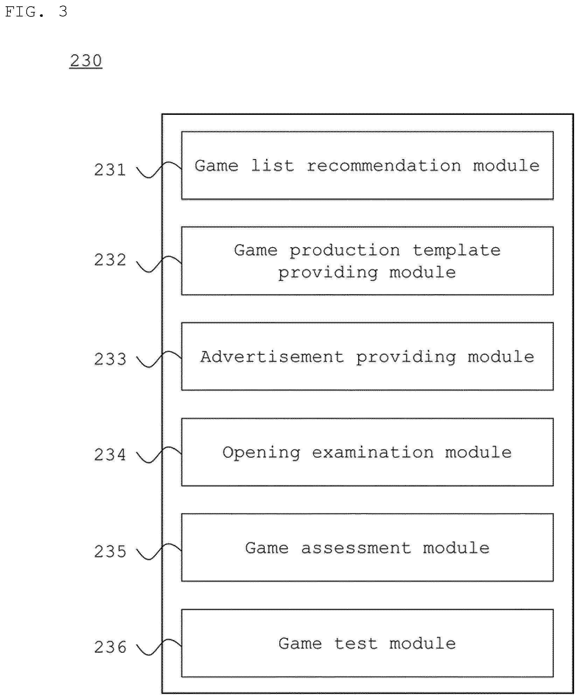

FIG. 1 is a diagram showing a schematic configuration of the game production and distribution system according to an embodiment of the present invention; FIG. 2 is a diagram showing a schematic configuration of a game production and distribution server, which is a component of the present invention; and FIG. 3 is a diagram showing a schematic configuration of a control unit, which is a component of the present invention.

Referring to FIGS. 1 to 3, the game production and distribution system may include a user terminal 100 and a game production and distribution server 200, wherein the game production and distribution server 200 includes a communication unit 210, a storage unit 220 and a control unit 230. At this time, the control unit 230 may include a game list recommendation module 231, a game production template providing module 232, an advertisement providing module 233, an opening examination module 234, a game assessment module 100 and a game test module 236.

More specifically, the user terminal 100 may display a smartphone, a tablet PC, a notebook computer and/or a desktop PC, and may be implemented as various electronic devices capable of transmitting and receiving data.

The game production and distribution server 200 may receive an input signal from the user terminal 100.

In this case, the input signal may include at least one of a game selection signal, a game production signal and a game upload signal.

Herein, the game selection signal refers to a signal indicating that the user has selected a game to play, while the game production signal refers to a signal indicating that the user will produce a game. Further, the game upload signal refers to a signal indicating that the user will upload the game having been completely produced or being produced to the server.

However, uploading a game, which has been completely produced or is being produced, on a server has a different meaning from opening the game to the public.

Further, the communication unit 210 may receive an input signal from the server terminal 100.

Further, the storage unit 220 may store at least one of user information, game production-related templates and the produced game.

At this time, the game production-related template means a template for producing various genres of games, and may include a template for producing games including, for example, at least one selected from platform games, casual games, racing games, simulation games, adventure games, shooting games, quiz games, action games, educational games, arcade games, puzzle games, sports games, board games, role-playing games and music games.

Further, the user terminal 100 may transmit the game production template produced by the user to the communication unit 210, and the storage unit 220 may store the game production template received by the communication unit 210 from the user terminal 100.

Further, when the input signals include a game selection signal, the control unit 230 may select a game corresponding to the game selection signal among the games stored in the storage unit 220 and then control the communication unit 210 to transmit the same to the user terminal 100.

At this time, the communication unit 210 may transmit a URL (Uniform Resource Locator) address connected to the selected game corresponding to the game selection signal to the user terminal 100.

Further, the game list recommendation module 231 may analyze a game selection propensity and a game performance ability of the user using the user information, generate a game list corresponding to the analyzed result, and control the communication unit 210 to transmit the generated game list to the user terminal 100.

More specifically, in relation to the game selection propensity of the user, the game list recommendation module 231 may select a game in a genre preferred by the user with reflection of the genre of games frequently selected by the user.

In this case, with regard to the genre of games frequently selected by the user, this may mean the number of times the user selects games for each genre.

Further, the game list recommendation module 231 may analyze a game performance ability of a user, determine a game performance level of the user, and then select a game corresponding to the user's game performance ability by reflecting the determined result.

That is, each game stored in the storage unit 220 and disclosed to a user may be set with a specific difficulty level.

Such a difficulty level for each game may be directly set by the user who produced the game, or may be automatically set according to the feedback of the user who played the game.

In consideration of the difficulty level for each game, the game list recommendation module 231 may utilize various indicators that can determine user's game ability, such as whether the user has cleared the game or a game clear time for the corresponding game, so as to determine a game performance ability of the user. Further, as a result of the determination, the game list recommendation module 231 may select a game having a difficulty level corresponding to the user's game performance ability by reflecting the same.

Further, when the input signals include a game production signal, the game production template providing module 232 may select a game production template corresponding to the game production signal and control the communication unit 210 to transmit the selected template to the user terminal 100.

In this case, the template may be sequentially executed or opened in the user terminal 100 so that the user can use the same for each game production stage. Herein, the template may mean providing objects required for game production wherein the objects required for game production can include not only various information related to a game such as image setting, collision area setting, player operation setting, etc., but also information on insertion of an advertisement, so as to determine whether or not to insert an advertisement into the corresponding produced game.

Further, the template may be set to implement the objects required for game production according to the passage of time or according to the order of game production.

In other words, when the user terminal 100 receives templates from the communication unit 210, the user terminal 100 may sequentially provide the received templates to the user in response to the template providing order set for each game genre.

At this time, providing the templates to the user sequentially may mean that the templates are sequentially executed, unpublished templates are sequentially disclosed, and the like.

That is, the user does not produce a game disorderly with one template simply provided to the user terminal 100, instead, in the case of the present invention, the user may user templates according to a preset order thereby conveniently creating a game if only using the provided templates in sequence.

In this case, the preset order may be set differently according to the genre of games.

Further, the preset order may vary such as an order of using templates, selection and arrangement of objects, and the like.

As such, using the templates in the preset order, the user may conveniently create a game even if he or she does not have high understanding and knowledge in relation to game production or coding.

Further, the game production template providing module 232 may set a grade of the user (user's rating) differently in consideration of the number of game executions by the user, the number of game productions (the number of producing games), the number of produced games (the number of games having been completely produced), and the number of public-opened games (the number of games that have been completely produced and released to general users). Further, in order to provide the user with a template corresponding to the set rating, the game production template providing module 232 may control the communication unit 210 to transmit the template corresponding to the set rating to the user terminal 100.

The template corresponding to the set rating may include an additional template separate from the existing templates generally provided to the user.

Further, when a separate cost is received from the maker producer, the game production template providing module 233 may provide the additional template only to the game producer who has deposited the cost.

Further, the advertisement providing module 233 may analyze a result of the user's game performance using the user information and then control the communication unit 210 to transmit an advertisement corresponding to the analyzed result to the user terminal 100.

At this time, the user information may include a preferred game genre of the user, age of the user, interest fields of the user, and the like, while the result of the user's game performance may include a game play time of the user, the preferred game genre of the user, and the like.

That is, the advertisement providing module 233 may control the communication unit 210 to transmit an advertisement suitable for the user to the user terminal 100 by reflecting the corresponding content.

Further, when the input signals include a game upload signal, the storage unit 220 may store the produced game included in the game upload signal, while the opening examination module 234 may examine whether or not to disclose the same to general users of the produced games stored in the storage unit 220.

The produce game included in the game upload signal may be a game that has been completely produced or a game that is being produced.

The opening examination module 234 may examine the produced game stored in the storage unit 220 and, when it is confirmed that a reason for non-disclosure is included in the produced game, may control the communication unit 210 to transmit a result of the confirmation to the user terminal 100 of a user who produced the same.

Further, when it is confirmed that the reason for non-disclosure is included in the produced game, the opening examination module 234 may control the produced game not to be disclosed to general users.

In this way, controlling the corresponding produced game not to be disclosed to the general users by the opening examination module 234 may include controlling the communication unit 210 not to transmit the game-related content to the user terminal 100.

In this case, the reason for non-disclosure may include inclusion of harmful content (violence, spam, fraud, hate, etc.), inclusion of nude or sexual content, and inclusion of gambling content, etc., but is not limited thereto.

Further, the opening examination module 234 may review the produced game and a thumbnail of the produced game stored in the storage unit 220 for uploading by the user and, if the produced game thumbnail has no correlation with the produced game stored in the storage unit 220 for uploading by the user, that is, does not correspond thereto, may control the corresponding produced game not to be disclosed.

Comparison between the produced game and the produced game thumbnail may be performed to determine whether there is a correlation between a user's description of the produced game and the produced game thumbnail.

Further, even when the opening examination module 234 has controlled the produced game to be disclosed, if it is determined that there is no correlation between the produced game thumbnail and the produce game through a feedback from the game users, it is possible to modify and control the produced game to become non-disclosed.

In this way, controlling the corresponding produced game not to be disclosed to general users by the opening examination module 234 may include controlling the communication unit 210 not to transmit the game-related content to the user terminal 100.

Further, the game assessment module 235 may evaluate the game by reviewing the produced game stored in the storage unit 220.

The game assessment module 235 may predict the popularity (number of plays) of the game so as to assess the game.

More specifically, the game assessment module 235 may compare a specific produced game stored in the storage unit 220 with other produced games previously stored in the storage unit 220, so as to determine similarity between the specific produced game and the other produced games and, on the basis of the determined similarity, the popularity (number of plays) of the specific produced game may be predicted.

The game assessment module 235 may determine the similarity between the specific produced game and other produced games in consideration of a user's description of the produced games, an object type, arrangement of the object, and a change of the object over time, etc.

For example, when comparing the similarity between a specific produced game A and a plurality of other produced games and then confirming a game B with the highest similarity, the opening examination module 234 may predict the popularity (number of plays) of the game A based on current popularity (number of plays) of the game B.

Further, when comparing the similarity between a specific produced game A and a plurality of other produced games and then confirming a game B with the highest similarity, the game assessment module 235 may determine merits and demerits of the specific produced game A as compared to the game B.

At this time, the merits and demerits may refer to a speed of the game, a difficulty level of the same based on the feelings of the general users, and a play time of the game, etc.

Further, the game assessment module 235 may review the specific produced game stored in the storage unit 220 and determine the similarity of the specific produce game as compared to other produced games, and may control the communication unit 210 so that the communication unit 210 transmits at least one of the merits and demerits compared to the other produced games as well as the predicted popularity (number of plays) of the specific produced game based on the above-determined similarity to the user terminal 100 that has received transmission of a game upload signal for the specific produced game by the communication unit 210.

Further, the game test module 236 may control the communication unit 210 to transmit a test mode for the produced game ("produced game test mode") to the user terminal 100 so that the user can test the produced game.

Further, the user terminal 100 may execute the received produced game test mode to investigate whether or not there is a bug in the actually produced game.

Further, the produced game test mode transmitted by the communication unit 210 to the user terminal 100 may provide the user terminal 100 with a general game bug situation, reasons and solutions thereof. If a bug occurs in the game directly produced by the user who has the user terminal 100, a reason for occurrence of the bug and a solution may be provided to the user terminal 100.

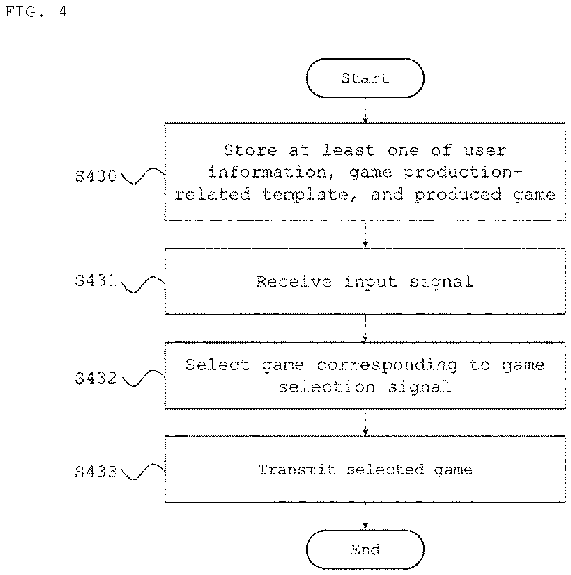

FIG. 4 is a diagram showing a schematic flow of the game production and distribution method according to an embodiment of the present invention.

Referring to FIG. 4, the storage unit 220 may store at least one of user information, a game production-related template, and a produced game (S430).

Further, the communication unit 210 may receive input signals from the user terminal 100 (S431).

Further, when the input signals include a game selection signal, the control unit 230 may select a game corresponding to the game selection signal among games stored in the storage unit 220 (S432).

In addition, the communication unit 210 may transmit the game selected by the control unit 230 to the user terminal 100 (S433).

As described above, the configuration and operation of a game production and distribution system and method for producing and distributing HTML5-based web games according to an embodiment of the present invention may be implemented. Meanwhile, in the description of the present invention, specific embodiments have been described, however, various modifications can also be implemented without departing from the scope of the present invention.

Although the present invention has been described above with reference to specific embodiments and drawings, the present invention is not limited thereto. Therefore, various modifications and variations are possible by those skilled in the art.

Those skilled in the technical field in relation to the present embodiments would appreciate that the present invention may be implemented in modified forms within a range not departing from the essential characteristics of the above description. Therefore, the method of disclosure should be considered from an explanatory aspect rather than restricted point of view. The scope of the present invention is specified by the claims rather than the above description, and all differences within the scope equivalent thereto should be construed as being included in the present invention.

## Claims

1. A game production and distribution system, comprising a game production and distribution server for receiving input signals from a user terminal,
wherein the game production and distribution server includes:
a communication unit to receive an input signal from the user terminal;
a storage unit that stores at least one among user information, game production-related templates and a produced game; and
a control unit that selects a game corresponding to a game selection signal among the games stored in the storage unit when the input signals include the game selection signal, and controls the communication unit to transmit the selected game to the user terminal.

2. The system according to claim 1, wherein the control unit includes:
a game list recommendation module that analyzes a game selection propensity and game performance ability of the user using the user information, generates a game list corresponding to the analyzed result, and then, controls the communication unit to transmit the generated game list to the user terminal.

3. The system according to claim 1, wherein the control unit further includes:
a game production template providing module that selects a game production template corresponding to a game production signal if the input signals include the game production signal, and controls the communication unit to transmit the selected template to the user terminal.

4. The system according to claim 1, wherein the control unit further includes:
an advertisement providing module that analyzes a result of game performance by the user using the user information and controls the communication unit to transmit an advertisement corresponding to the analyzed result to the user terminal.

5. The system according to claim 1, wherein the storage unit stores the produced game contained in a game upload signal when the input signals include the game upload signal, and
wherein the control unit further includes an opening examination module that examines whether or not to disclose the produced game stored in the storage unit.

6. A game production and distribution method, comprising:
storing at least one among user information, game production-related templates and a produced game in a storage unit;
receiving input signals from a user terminal by a communication unit;
when the input signals include a game selection signal, selecting a game corresponding to the game selection signal among the games stored in the storage unit by a control unit; and
transmitting the game selected by the control unit to the user terminal through the communication unit.
